# EUROPEAN PATENT APPLICATION

(11) **EP 4 737 181 A1**
(43) Date of publication of application: **06.05.2026**
(21) Application number: 24832172.1
(22) Date of filing: 23.02.2024
(51) Int. Cl.: B60K 35/00, G02B 27/01, B60K 35/22, B60K 35/23, B60K 35/81

(54) **DISPLAY DEVICE FOR VEHICLE**

(30) Priority: 28.06.2023 KR 20230083536
(71) Applicant: LG Electronics Inc., Yeongdeungpo-gu Seoul 07336 (KR)
(72) Inventor: KIM, Jinyong, Seoul 06772 (KR); JUNG, Youngho, Seoul 06772 (KR)
(74) Representative: Vossius & Partner Patentanwälte Rechtsanwälte mbB
(86) International application number: PCT/KR2024/002410
(87) International publication number: WO 2025/005384

(57) **Abstract**

A display apparatus for a vehicle is disclosed. A display apparatus for a vehicle according to an embodiment of the present disclosure includes: a picture generation device including a light output device and configured to output a projection image; a first screen including one surface on which a first projection image corresponding to a portion of the projection image from the picture generation device is projected; a first mirror configured to reflect a second projection image corresponding to another portion of the projection image from the picture generation device; a second mirror configured to reflect the second projection image from the first mirror; and a second screen horizontally adjacent to the first screen and having one surface on which the second projection image reflected from the second mirror is projected. Accordingly, a plurality of displays can be integrally implemented using a single picture generation device.

## Description

### BACKGROUND

### 1. Field

The present disclosure relates to a display apparatus for a vehicle, and more particularly, to a display apparatus for a vehicle capable of implementing a plurality of displays in an integrated manner using a single picture generation device.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is positioned on an instrument cluster to present various types of information. In addition to the cluster display, in order to display vehicle driving information and the like, various displays, such as a center information display (CID) and a head-up display that outputs a projection image onto a windshield, are increasingly being mounted in vehicles.

As various displays are disposed in a vehicle, methods for operating the displays in an integrated manner have been studied.

Meanwhile, Japanese Laid-open Patent Publication No. 11-59224 (hereinafter referred to as "Prior Art Document 1"), which is hereby incorporated by reference, discloses a front window display device that adjusts the brightness of a head-up display (HUD) of the window display device based on data of an illuminance sensor.

However, in Prior Art Document 1, only the window display device is disclosed, and thus it has a limitation in that integrated operation of various displays is difficult.

Meanwhile, U.S. Patent Publication No. US10298890 (hereinafter referred to as "Prior Art Document 2"), which is hereby incorporated by reference, discloses a vehicle display device that projects an image using a cluster display.

However, in Prior Art Document 2, only the cluster display is disclosed, and thus it has a limitation in that integrated operation of various displays is difficult.

### SUMMARY

It is an object of the present disclosure to provide a display apparatus for a vehicle capable of implementing a plurality of displays in an integrated manner using a single picture generation device.

It is another object of the present disclosure to provide a display apparatus for a vehicle capable of implementing a cluster display and a center information display in an integrated manner using a single picture generation device.

In accordance with an aspect of the present disclosure, the above and other objects can be accomplished by providing a display apparatus for a vehicle including: a picture generation device including a light output device and configured to output a projection image; a first screen including one surface on which a first projection image corresponding to a portion of the projection image from the picture generation device is projected; a first mirror configured to reflect a second projection image corresponding to another portion of the projection image from the picture generation device; a second mirror configured to reflect the second projection image from the first mirror; and a second screen horizontally adjacent to the first screen and having one surface on which the second projection image reflected from the second mirror is projected.

The second mirror can be a concave mirror.

A curvature of the second mirror can be greater than a curvature of the first mirror.

A center of the second mirror can be closer to the second screen than end portions of the second mirror.

A center of the second mirror can be spaced farther from the second screen than end portions of the second mirror.

The second projection image projected from the picture generation device can be an inverted image.

The display apparatus can further include a first actuator configured to change a position or an angle of the first mirror.

The display apparatus can further include a signal processing device configured to control the first actuator. Based on a change in the position or angle of the first mirror, the signal processing device can be configured to change a size of the second projection image projected onto the second screen.

The display apparatus can further include a third mirror configured to reflect a third projection image corresponding to another portion of the projection image from the picture generation device. The second mirror can reflect the third projection image from the third mirror.

The second projection image can be displayed in a first area of the second screen, and the third projection image can be displayed in a second area of the second screen.

The picture generation device can output the second projection image between the first projection image and the third projection image.

The third projection image can be displayed in an area of the second screen closer to the first screen, and the second projection image can be displayed in an area of the second screen spaced farther from the first screen.

The third projection image reflected from the third mirror can be incident on the second mirror while being spaced apart from the first mirror.

The second mirror and the third mirror can each be a concave mirror.

At least a portion of the third projection image reflected from the third mirror can be transmitted through the first mirror and be incident on the second mirror.

The display apparatus can further include a first actuator configured to change a position or an angle of the first mirror.

The display apparatus can further include a signal processing device configured to control the first actuator. Based on a change in the position or angle of the first mirror, the signal processing device can be configured to change a size of the second projection image projected onto the second screen.

In response to outputting the first projection image and the second projection image from the picture generation device, the first projection image can be displayed on the first screen, and the second projection image can be displayed on the second screen. In response to outputting the first projection image, the second projection image, and the third projection image from the picture generation device, the first projection image can be displayed on the first screen, and the second projection image and the third projection image can be displayed on the second screen.

In response to outputting the first projection image and the second projection image from the picture generation device, the first mirror can be at a first position. In response to outputting the first projection image, the second projection image, and the third projection image from the picture generation device, the first mirror can be at a second position.

The display apparatus can further include a second actuator configured to change a position or an angle of the second mirror.

In accordance with another aspect of the present disclosure, there is provided a display apparatus for a vehicle including: a picture generation device including a light output device and configured to output a projection image; a first screen including one surface on which a first projection image corresponding to a portion of the projection image from the picture generation device is projected; a first mirror configured to reflect a second projection image corresponding to another portion of the projection image from the picture generation device; a second mirror configured to reflect the second projection image from the first mirror; a third mirror configured to reflect a third projection image corresponding to another portion of the projection image from the picture generation device; and a second screen horizontally adjacent to the first screen and having one surface on which at least one of the second projection image reflected from the second mirror or the third projection image is projected.

In accordance with yet another aspect of the present disclosure, there is provided a display apparatus for a vehicle including: a picture generation device including a light output device and configured to output a first projection image, which is a portion of a projection image, and a second projection image corresponding to another portion of the projection image; a first mirror configured to reflect the second projection image from the picture generation device; a second mirror configured to reflect the second projection image from the first mirror; and a screen including a first area on which the first projection image from the picture generation device is projected and a second area on which the second projection image from the second mirror is projected.

### EFFECTS OF THE DISCLOSURE

A display apparatus for a vehicle according to an embodiment of the present disclosure includes: a picture generation device including a light output device and configured to output a projection image; a first screen including one surface on which a first projection image corresponding to a portion of the projection image from the picture generation device is projected; a first mirror configured to reflect a second projection image corresponding to another portion of the projection image from the picture generation device; a second mirror configured to reflect the second projection image from the first mirror; and a second screen horizontally adjacent to the first screen and having one surface on which the second projection image reflected from the second mirror is projected. Accordingly, by using the single picture generation device, it is possible to implement a plurality of displays in an integrated manner. In particular, by using the single picture generation device, it is possible to implement a cluster display and a center information display in an integrated manner.

Meanwhile, the second mirror can be a concave mirror. Accordingly, it is possible to stably display an image on the second screen including a size larger than the first screen.

Meanwhile, a curvature of the second mirror can be greater than a curvature of the first mirror. Accordingly, it is possible to stably display an image on the second screen including a size larger than the first screen.

Meanwhile, a center of the second mirror can be closer to the second screen than end portions of the second mirror. Accordingly, it is possible to stably display an image on the second screen including a size larger than the first screen.

Meanwhile, a center of the second mirror can be spaced farther from the second screen than end portions of the second mirror. Accordingly, it is possible to stably display an image on the second screen including a size larger than the first screen.

Meanwhile, the second projection image projected from the picture generation device can be an inverted image. Accordingly, it is possible to stably display an image on the second screen including a size larger than the first screen.

Meanwhile, the display apparatus for a vehicle can further include a first actuator configured to change a position or an angle of the first mirror. Accordingly, it is possible to change the size of an image projected onto the second screen.

Meanwhile, the display apparatus for a vehicle can further include a signal processing device configured to control the first actuator. Based on a change in the position or angle of the first mirror, the signal processing device can be configured to change a size of the second projection image projected onto the second screen. Accordingly, it is possible to change the size of an image projected onto the second screen while implementing a plurality of displays in an integrated manner using the single picture generation device.

Meanwhile, the display apparatus for a vehicle can further include a third mirror configured to reflect a third projection image corresponding to another portion of the projection image from the picture generation device. The second mirror can reflect the third projection image from the third mirror. Accordingly, by using the single picture generation device, it is possible to implement a plurality of displays in an integrated manner.

Meanwhile, the second projection image can be displayed in a first area of the second screen, and the third projection image can be displayed in a second area of the second screen. Accordingly, it is possible to display a plurality of images on the second screen.

Meanwhile, the picture generation device can output the second projection image between the first projection image and the third projection image. Accordingly, by using the single picture generation device, it is possible to implement a plurality of displays in an integrated manner.

Meanwhile, the third projection image can be displayed in an area of the second screen closer to the first screen, and the second projection image can be displayed in an area of the second screen spaced farther from the first screen. Accordingly, by using the single picture generation device, it is possible to implement a plurality of displays in an integrated manner.

Meanwhile, the third projection image reflected from the third mirror can be incident on the second mirror while being spaced apart from the first mirror. Accordingly, by using the single picture generation device, it is possible to implement a plurality of displays in an integrated manner.

Meanwhile, the second mirror and the third mirror can each be a concave mirror. Accordingly, it is possible to stably display an image on the second screen including a size larger than the first screen.

Meanwhile, at least a portion of the third projection image reflected from the third mirror can be transmitted through the first mirror and be incident on the second mirror. Accordingly, it is possible to stably display an image on the second screen including a size larger than the first screen.

Meanwhile, the display apparatus for a vehicle can further include a first actuator configured to change a position or an angle of the first mirror. Accordiingly, it is possible to change the size of an image displayed on the second screen.

Meanwhile, the display apparatus for a vehicle can further include a signal processing device configured to control the first actuator. Based on a change in the position or angle of the first mirror, the signal processing device can be configured to change a size of the second projection image projected onto the second screen. Accordingly, it is possible to change the size of an image displayed on the second screen while implementing a plurality of displays in an integrated manner using the single picture generation device.

Meanwhile, in response to outputting the first projection image and the second projection image from the picture generation device, the first projection image can be displayed on the first screen, and the second projection image can be displayed on the second screen. In response to outputting the first projection image, the second projection image, and the third projection image from the picture generation device, the first projection image can be displayed on the first screen, and the second projection image and the third projection image can be displayed on the second screen. Accordingly, it is possible to display various images on the second screen while implementing a plurality of displays in an integrated manner using the single picture generation device.

Meanwhile, in response to outputting the first projection image and the second projection image from the picture generation device, the first mirror can be at a first position. In response to outputting the first projection image, the second projection image, and the third projection image from the picture generation device, the first mirror can be at a second position. Accordingly, it is possible to display various images on the second screen while implementing a plurality of displays in an integrated manner using the single picture generation device.

Meanwhile, the display apparatus for a vehicle can further include a second actuator configured to change a position or an angle of the second mirror. Accordingly, it is possible to realize ambient lighting in the vehicle interior.

A display apparatus for a vehicle according to another embodiment of the present disclosure includes: a picture generation device including a light output device and configured to output a projection image; a first screen including one surface on which a first projection image corresponding to a portion of the projection image from the picture generation device is projected; a first mirror configured to reflect a second projection image corresponding to another portion of the projection image from the picture generation device; a second mirror configured to reflect the second projection image from the first mirror; a third mirror configured to reflect a third projection image corresponding to another portion of the projection image from the picture generation device; and a second screen horizontally adjacent to the first screen and having one surface on which at least one of the second projection image reflected from the second mirror or the third projection image is projected. Accordingly, by using the single picture generation device, it is possible to implement a plurality of displays in an integrated manner. In particular, by using the single picture generation device, it is possible to implement a cluster display and a center information display in an integrated manner.

A display apparatus for a vehicle according to yet another embodiment of the present disclosure includes: a picture generation device including a light output device and configured to output a first projection image, which is a portion of a projection image, and a second projection image corresponding to another portion of the projection image; a first mirror configured to reflect the second projection image from the picture generation device; a second mirror configured to reflect the second projection image from the first mirror; and a screen including a first area on which the first projection image from the picture generation device is projected and a second area on which the second projection image from the second mirror is projected. Accordingly, by using the single picture generation device, it is possible to implement a plurality of displays in an integrated manner. In particular, by using the single picture generation device, it is possible to implement a cluster display and a center information display in an integrated manner.

### BRIEF DESCRIPTION OF THE DRAWINGS

FIG. 1 illustrates an example of the exterior and interior of a vehicle.
FIG. 2 illustrates an outer appearance of a display apparatus for a vehicle according to an embodiment of the present disclosure.
FIG. 3 illustrates an example of an internal block diagram of the display apparatus for a vehicle of FIG. 2.
FIG. 4 illustrates an example of an internal configuration of a display apparatus for a vehicle according to an embodiment of the present disclosure.
FIG. 5 illustrates an example of an internal block diagram of the display apparatus for a vehicle of FIG. 4.
FIGS. 6A to 7 are diagrams referred to in the description of FIG. 4.
FIG. 8 illustrates an example of an internal configuration of a display apparatus for a vehicle according to another embodiment of the present disclosure.
FIG. 9 illustrates an example of an internal configuration of a display apparatus for a vehicle according to yet another embodiment of the present disclosure.
FIGS. 10A to 11B are diagrams referred to in the description of FIG. 8 or FIG. 9.
FIG. 12 illustrates an outer appearance of a display apparatus for a vehicle according to yet another embodiment of the present disclosure.

### DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

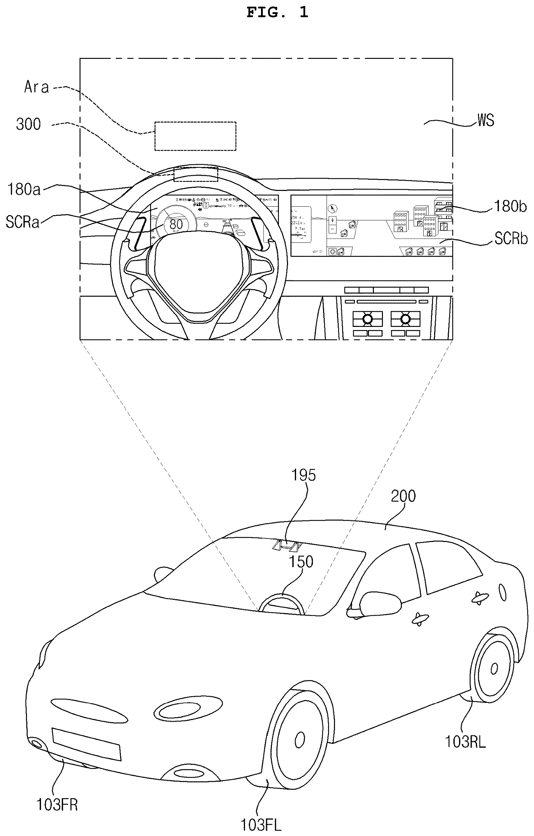

FIG. 1 illustrates an example of the exterior and interior of a vehicle.

Referring to FIG.1, a vehicle 200 can include a plurality of wheels 103FR, 103FL, 103RL,... rotated by a power source and a steering wheel 150 for adjusting a traveling direction of the vehicle 200.

The vehicle 200 can further include a camera 195 for acquiring an image of the front of the vehicle.

The vehicle 200 can further include therein a plurality of displays 180a, 180b, and 180h for displaying images, information, and the like.

For example, among the plurality of displays 180a, 180b, and 180h, a first display 180a can be a cluster display, a second display 180b can be a center information display (CID), and a third display 180h can be a head-up display (HUD) that projects an image onto a predetermined area Ara of a windshield WS.

Meanwhile, in the present disclosure, among the plurality of displays 180a, 180b, and 180h, the first display 180a and the second display 180b are integrated and implemented as a single apparatus.

To this end, a display apparatus 100 for a vehicle (or simply referred to as "vehicle display apparatus") according to embodiments of the present disclosure includes a picture generation device 300.

That is, the vehicle display apparatus 100 according to embodiments of the present disclosure outputs a plurality of projection images using a single picture generation device 300, separates optical paths of the plurality of projection images, and projects a first projection image, through a first optical path, onto a first screen SCRa to thereby display cluster information and projects a second projection image, through a second optical path, onto a second screen SCRb to thereby display various information such as a navigation image. Accordingly, it is possible to implement a plurality of displays in an integrated manner.

Meanwhile, the vehicle 200 described herein can be a concept including all of an internal combustion engine vehicle having an engine as a power source, a hybrid vehicle having an engine and an electric motor as power sources, and an electric vehicle having an electric motor as a power source.

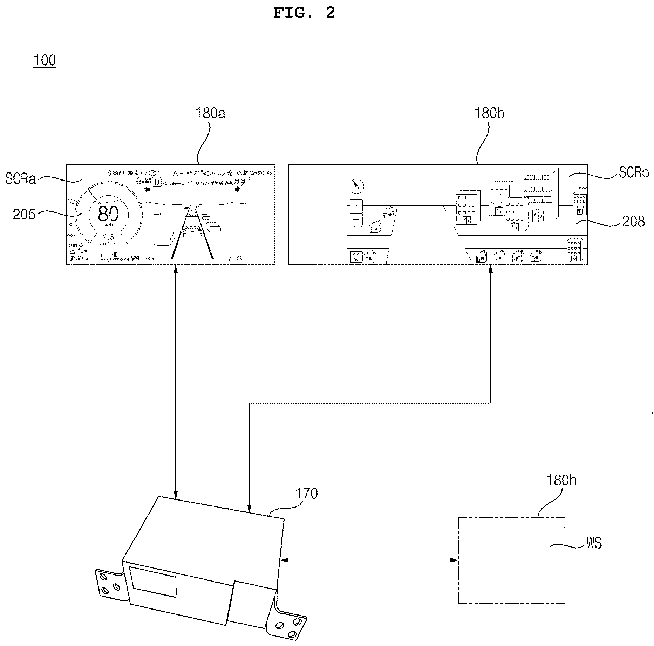

FIG. 2 illustrates an outer appearance of a display apparatus for a vehicle according to an embodiment of the present disclosure.

The vehicle display apparatus 100 according to an embodiment of the present disclosure can include a signal processing device 170 configured to perform signal processing to display an image and information on at least one of the plurality of displays 180a, 180b, and 180h.

As for the plurality of displays 180a, 180b, and 180h, the first display 180a can be a cluster display 180a for displaying a driving state and operation information, the second display 180b can be a center information display (CID) 180b for displaying vehicle driving information, a navigation map, various types of entertainment information, or an image, and the third display 180h can be a HUD display 180h for displaying vehicle driving information.

Meanwhile, among the plurality of displays 180a, 180b, and 180h, the first display 180a can include a first screen SCRa that displays a first projection image 205, and the second display 180b can include a second screen SCRb that displays a second projection image 208.

The signal processing device 170 can be provided therein with a memory 508 and a processor 175 to control at least one of the plurality of displays 180a, 180b, and 180h.

Meanwhile, the signal processing device 170 can execute first to third virtual machines (not shown) on a hypervisor 505 in the processor 175.

The first virtual machine (not shown), which is a server virtual machine, can control the second virtual machine (not shown) and the third virtual machine (not shown), which are guest virtual machines.

Meanwhile, the second virtual machine can be referred to as a first guest virtual machine, and the third virtual machine can be referred to as a second guest virtual machine.

The first guest virtual machine (not shown) can be operated for the first display 180a, and the second guest virtual machine (not shown) can be operated for the second display 180b or the third display 180h.

Meanwhile, the server virtualization machine (not shown) in the processor 175 can be configured to set the memory 508 based on the hypervisor 505 for transmission of the same data to the first guest virtualization machine (not shown) and the second guest virtualization machine (not shown). Accordingly, the first display 180a and the second display 180b in the vehicle can display the same information or the same image in a synchronized manner.

Meanwhile, the server virtualization machine (not shown) in the processor 175 can receive and process wheel speed sensor data of the vehicle, and can transmit the processed wheel speed sensor data to at least one of the first guest virtualization machine (not shown) and the second guest virtualization machine (not shown). Accordingly, at least one virtual machine can share the wheel speed sensor data of the vehicle.

Thus, it is possible to control the plurality of displays 180a, 180b, and 180h by using the single signal processing device 170.

Meanwhile, some of the plurality of displays 180a, 180b, and 180h can operate under a Linux-based operating system (OS), and others can operate under a Web-based operating system (OS).

In some embodiments, the signal processing device 170 can control the plurality of displays 180a, 180b, and 180h operating under different operating systems (OS) to display the same information or the same image in a synchronized manner.

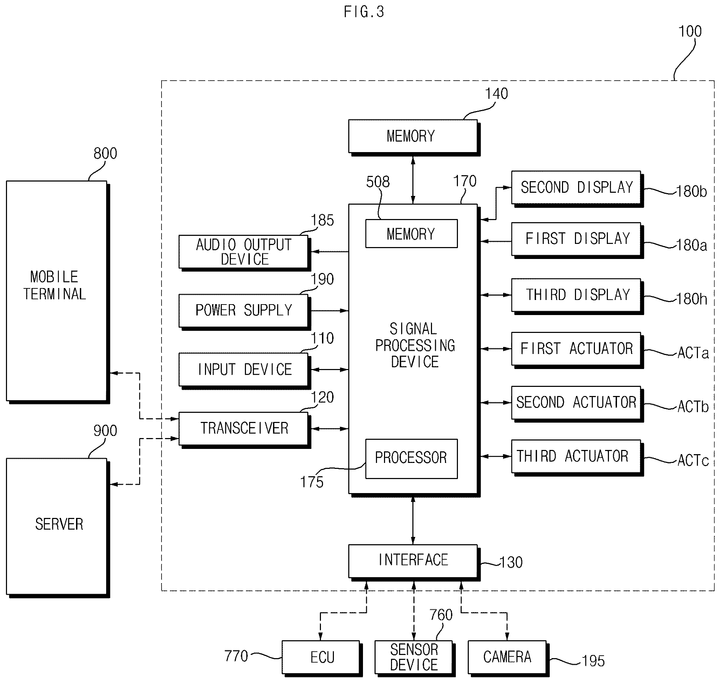

FIG. 3 illustrates an example of an internal block diagram of a display apparatus for a vehicle according to an embodiment of the present disclosure.

Referring to FIG. 3, the vehicle display apparatus 100 according to an embodiment of the present disclosure can include an input device 110, a transceiver 120, an interface 130, a memory 140, a signal processing device 170, a plurality of displays 180a, 180b, and 180h, an audio output device 185, and a power supply 190.

The input device 110 can include a physical button, a pad, and the like for button input, touch input, and the like.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The transceiver 120 can receive weather information and road traffic condition information, e.g., transport protocol expert group (TPEG) information, from the mobile terminal 800 or the server (not shown) . To this end, the transceiver 120 can include a mobile communication module (not shown) .

The interface 130 can receive sensor information from an electronic control unit (ECU) 770 or a sensor device 760, and can transmit the received information to the signal processing device 170.

Here, the sensor information can include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module can include a GPS module for receiving GPS information.

Meanwhile, the interface 130 can receive front-of-vehicle image data, side-of-vehicle image data, rear-of-vehicle image data, and obstacle-around-vehicle distance information from a camera 195, a LiDAR (not shown), or the like, and can transmit the received information to the signal processing device 170.

The memory 140 can store various data necessary for the overall operation of the vehicle display apparatus 100, such as programs for processing or control of the signal processing device 170.

For example, the memory 140 can store data regarding a hypervisor, a server virtual machine (not shown), and a plurality of guest virtual machines to execute within the processor 175.

The audio output device 185 can convert an electrical signal from the signal processing device 170 into an audio signal and output the audio signal. To this end, the audio output device 185 can include a speaker and the like.

The power supply 190 can supply power required to operate components under the control of the signal processing device 170. In particular, the power supply 190 can receive power from a battery in the vehicle.

The HUD display 180h, which is the third display, can include the picture generation device 300 of FIG. 1 to project an image, and can output an augmented reality-based object under the control of the signal processing device 170.

For example, the HUD display 180h can output vehicle speed information, vehicle traveling direction information, a forward-vehicle object, a distance indicator showing a distance to a vehicle ahead, and the like.

In another example, the HUD display 180h can output an augmented reality lane carpet, an augmented reality route carpet, or an augmented reality dynamic carpet corresponding to a road image.

The signal processing device 170 can control the plurality of displays 180a, 180b, and 180h.

The signal processing device 170 can control the overall operation of each unit or device in the vehicle display apparatus 100.

For example, the signal processing device 170 can include a memory 508 and a processor 175 configured to perform signal processing for the vehicle displays 180a and 180b.

The processor 175 can execute the hypervisor (not shown), and can execute the server virtual machine (not shown) and the plurality of guest virtual machines (not shown) on the executed hypervisor.

Here, the first guest virtual machine (not shown) can be operated for the first display 180a, and the second guest virtual machine (not shown) can be operated for the second display 180b or the third display 180h.

Meanwhile, the signal processing device 170 can process various signals, such as an audio signal, an image (or video) signal, and a data signal. To this end, the signal processing device 170 can be implemented in the form of a system on chip (SOC).

The vehicle display apparatus 100 according to an embodiment of the present disclosure can further include a plurality of actuators ACTa to ACTc configured to change a position or an angle of a plurality of mirrors described below.

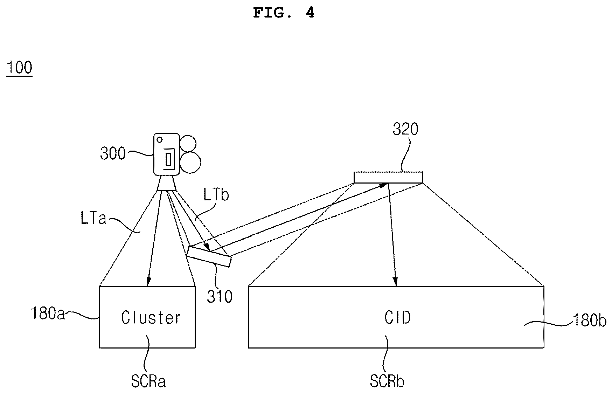

FIG. 4 illustrates an example of an internal configuration of a display apparatus for a vehicle according to an embodiment of the present disclosure.

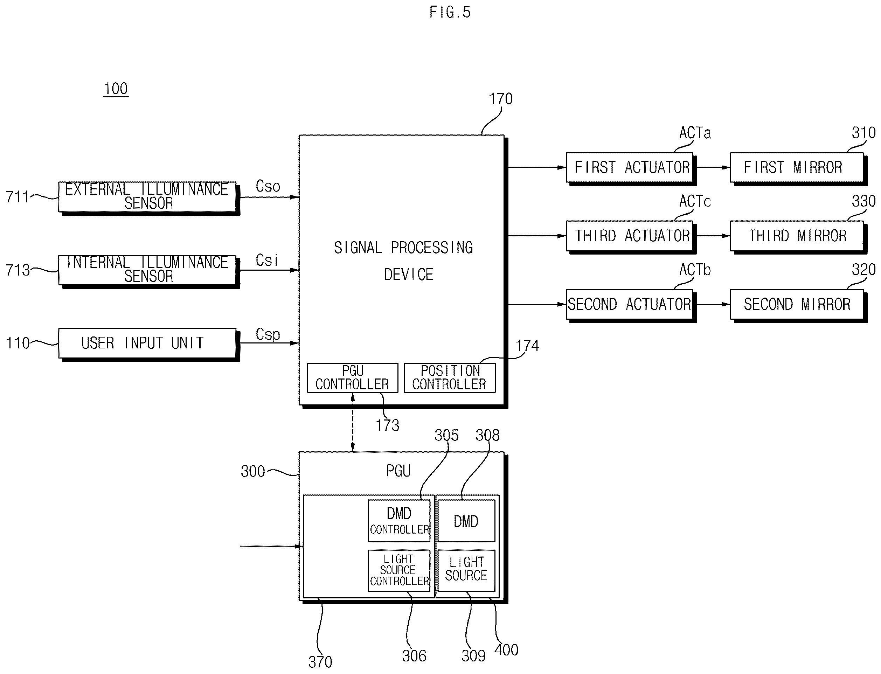

Referring to FIG. 4, the vehicle display apparatus 100 according to an embodiment of the present disclosure includes a picture generation device 300 that includes a light output device 400 (see FIG. 5) and outputs a projection image, a first screen SCRa having one surface on which a first projection image LTa, which is a portion of the projection image from the picture generation device 300, is projected, a first mirror 310 that reflects a second projection image LTb, which is another portion of the projection image from the picture generation device 300, a second mirror 320 that reflects the second projection image LTb from the first mirror 310, and a second screen SCRb that is horizontally adjacent to the first screen SCRa and has one surface on which the second projection image LTb reflected from the second mirror 320 is projected.

Accordingly, by using the single picture generation device 300, it is possible to implement a plurality of displays in an integrated manner. In particular, by using the single picture generation device 300, it is possible to implement a cluster display and a center information display (CID) in an integrated manner.

Meanwhile, a first path through which the first projection image LTa reaches the first screen SCRa is longer than a second path through which the second projection image LTb reaches the second screen SCRb.

Meanwhile, the picture generation device 300 can output the first projection image LTa and the second projection image LTb horizontally separated from each other.

Although the first mirror 310 and the second mirror 320 are illustrated as flat mirrors in FIG. 4, various modifications can be made.

Meanwhile, a size of the second screen SCRb is larger than a size of the first screen SCRa, and correspondingly, the second mirror 320 can have a size larger than that of the first mirror 310.

When the vehicle engine is turned on, the vehicle display apparatus 100 according to an embodiment of the present disclosure can first project the first projection image LTa, and then can project the second projection image LTb.

Meanwhile, the vehicle display apparatus 100 according to an embodiment of the present disclosure can be configured such that brightness of the first projection image LTa displayed on the first screen SCRa is different from brightness of the second projection image LTb displayed on the second screen SCRb.

FIG. 5 illustrates an example of an internal block diagram of the display apparatus for a vehicle of FIG. 4.

Referring to FIG. 5, the vehicle display apparatus 100 according to an embodiment of the present disclosure includes a signal processing device 170 and a picture generation device 300.

Meanwhile, the first projection image LTa, which is a portion of the projection image from the picture generation device 300, can be projected onto one surface of the first screen SCRa. Accordingly, it is possible to display a cluster image on the first display 180a including the first screen SCRa.

Meanwhile, the second projection image LTb, which is another portion of the projection image from the picture generation device 300, can be projected onto one surface of the second screen SCRb after passing through the first mirror 310 and the second mirror 320. Accordingly, it is possible to display various information or images on the second screen SCRb including the second display 180b.

Meanwhile, the signal processing device 170 can control the picture generation device 300.

Meanwhile, the signal processing device 170 can control a luminance of the first projection image LTa or the second projection image LTb to have a first level in a first mode, and can control the luminance of the first projection image LTa or the second projection image LTb to have a second level in a second mode. Accordingly, it is possible to change the luminance of the first projection image LTa or the second projection image LTb.

Meanwhile, the vehicle display apparatus 100 according to an embodiment of the present disclosure can further include an external illuminance sensor 711, an internal illuminance sensor, and/or a user input unit 110.

Based on an external illuminance Cso from the external illuminance sensor 711, an internal illuminance Csi from the internal illuminance sensor 713, or a setting input Csp from the user input device 110, the signal processing device 170 can output a control signal for varying or adjusting a luminance of the first projection image LTa or the second projection image LTb.

For example, the signal processing device 170 can control the luminance of the first projection image LTa or the second projection image LTb to increase as the external illuminance Cso increases.

In another example, the signal processing device 170 can control the luminance of the first projection image LTa or the second projection image LTb to increase as the internal illuminance Csi decreases.

In another example, the signal processing device 170 can control the luminance of the first projection image LTa or the second projection image LTb to decrease as the setting input Csp decreases. Accordingly, it is possible to adjust the luminance of the first projection image LTa or the second projection image LTb projected onto the first screen SCRa or the second screen SCRb.

Meanwhile, the picture generation device 300 includes a light output device 400 for light output.

The light output device 400 can include a light source 309 and a digital mirror device 308 that reflects light emitted from the light source 309.

For example, the light source 309 can include an LED diode, a laser diode, or the like.

The digital mirror device 308 can include a plurality of digital mirrors. For example, the digital mirror device 308 can include a digital micromirror device (DMD).

Meanwhile, the picture generation device 300 can further include a digital mirror controller 305 for controlling the digital mirror device 308, and a light source controller 306 for controlling the light source 309.

In particular, the picture generation device 300 can be provided with a processor 370, and the processor 370 can include the digital mirror controller 305 for controlling the digital mirror device 308, and the light source controller 306 for controlling the light source 309.

Meanwhile, the signal processing device 170 can include a picture generation controller 173 for controlling the picture generation device 300 and a position controller 174 for controlling a position or an angle of a plurality of mirrors 310 to 330.

Meanwhile, in order to reduce a luminance difference between the first projection image LTa projected onto the first screen SCRa and the second projection image LTb projected onto the second screen SCRb, the signal processing device 170 can control, on a frame-by-frame basis, a luminance of the first projection image LTa to be lower than a luminance of the second projection image LTb output from the light output device 400.

For example, the signal processing device 170 can control an area of the digital mirror device 308 corresponding to the first projection image LTa to be turned off during a first period.

In this case, the signal processing device 170 can control an area of the digital mirror device 308 corresponding to the second projection image LTb to be switched on or off during the first period.

That is, the signal processing device 170 can control the digital mirror device 308 such that, during the first period, a turn-off count or a turn-off frequency of the area corresponding to the first projection image LTa is greater than a turn-off count or a turn-off frequency of the area corresponding to the second projection image LTb. This allows the luminance of the first projection image LTa to be lower than the luminance of the second projection image LTb output from the light output device 400.

In another example, the signal processing device 170 can control, during the first period, a light source corresponding to the first projection image LTa to be at least partially turned off and a light source corresponding to the second projection image LTb to be switched on or off.

That is, the signal processing device 170 can control the light source 309 such that, during the first period, a turn-off count or a turn-off frequency of the light source corresponding to the first projection image LTa is greater than a turn-off count or a turn-off frequency of the light source corresponding to the second projection image LTb. This allows the luminance of the first projection image LTa to be lower than the luminance of the second projection image LTb output from the light output device 400.

Meanwhile, based on the external illuminance Cso from the external illuminance sensor 711, the internal illuminance Csi from the internal illuminance sensor 713, or the setting input Csp from the user input device 110, the signal processing device 170 can perform operation control of the digital mirror device 308 or the light source 309.

For example, in response to an increase in the external illumination Cso, the signal processing device 170 can control, on a frame-by-frame basis, the luminance of the first projection image LTa to be less than the luminance of the second projection image LTb output from the light output device 400.

In another example, in response to a decrease in the internal illumination Csi, the signal processing device 170 can control, on a frame-by-frame basis, the luminance of the first projection image LTa to be less than luminance of the second projection image LTb output from the light output device 400.

In another example, in response to a decrease in the setting input Csp, the signal processing device 170 can control, on a frame-by-frame basis, the luminance of the first projection image LTa to be less than luminance of the second projection image LTb output from the light output device 400.

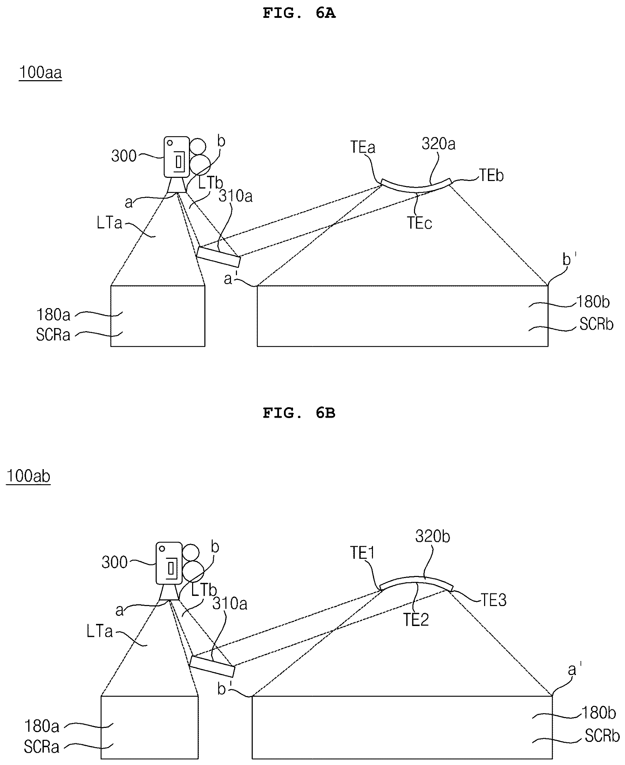

FIGS. 6A to 7 are diagrams referred to in the description of FIG. 4.

FIG. 6A illustrates another example of an internal configuration of a display apparatus for a vehicle according to an embodiment of the present disclosure.

Referring to FIG. 6, a display apparatus 100aa for a vehicle (or simply referred to as "vehicle display apparatus") according to an embodiment of the present discourse includes a picture generation device 300 that outputs a projection image, a first screen SCRa having one surface on which a first projection image LTa, which is a portion of the projection image from the picture generation device 300, is projected, a first mirror 310 that reflects a second projection image LTb, which is another portion of the projection image from the picture generation device 300, a second mirror 320a that reflects the second projection image LTb from the first mirror 310, and a second screen SCRb that is horizontally adjacent to the first screen SCRa and has one surface on which the second projection image LTb reflected from the second mirror 320a is projected.

Meanwhile, unlike FIG. 4, the second mirror 320a can be a concave mirror. Accordingly, it is possible to stably display an image on the second screen SCRb having a size larger than the first screen SCRa.

That is, the second mirror 320a can have a greater curvature than the first mirror 310. For example, when the first mirror 310 is a flat mirror, its curvature is zero (0), and thus the curvature of the second mirror 320a configured as a concave mirror can be greater. Accordingly, it is possible to stably display an image on the second screen SCRb having a size larger than the first screen SCRa.

Meanwhile, a center TEc of the second mirror 320a can be closer to the second screen SCRb than end portions TEa and TEb of the second mirror 320a. Accordingly, it is possible to stably display an image on the second screen SCRb having a size larger than the first screen SCRa.

Meanwhile, according to FIG. 6A, of an area a and an area b within the second projection image LTb output from the picture generation device 300, the area a that is closer to the first screen SCRa can be reflected from the first mirror 310 and the second mirror 320a, and can be displayed in an area a' within the second screen SCRb, the area a' being adjacent to the first screen SCRa.

Meanwhile, according to FIG. 6A, of the area a and the area b within the second projection image LTb output from the picture generation device 300, the area b that is spaced farther from the first screen SCRa can be reflected from the first mirror 310 and the second mirror 320a, and can be displayed in an area b' within the second screen SCRb, the area b' being spaced apart from the first screen SCRa.

That is, according to FIG. 6A, the second projection image LTb projected onto the second screen SCRb can be a normal (non-inverted) projection image.

FIG. 6B illustrates another example of an internal configuration of a display apparatus for a vehicle according to an embodiment of the present disclosure.

Referring to FIG. 6B, a display apparatus 100ab for a vehicle (or simply referred to as "vehicle display apparatus") according to an embodiment of the present disclosure includes a picture generation device 300 that outputs a projection image, a first screen SCRa having one surface on which a first projection image LTa, which is a portion of the projection image from the picture generation device 300, is projected, a first mirror 310 that reflects a second projection image LTb, which is another portion of the projection image from the picture generation device 300, a second mirror 320b that reflects the second projection image LTb from the first mirror 310, and a second screen SCRb that is horizontally adjacent to the first screen SCRa and has one surface on which the second projection image LTb reflected from the second mirror 320b is projected.

Meanwhile, unlike FIG. 4, the second mirror 320b can be a concave mirror. Accordingly, it is possible to stably display an image on the second screen SCRb having a size larger than the first screen SCRa.

That is, the second mirror 320b can have a greater curvature than the first mirror 310. Accordingly, it is possible to stably display an image on the second screen SCRb having a size larger than the first screen SCRa.

Meanwhile, a center TE3 of the second mirror 320b can be spaced farther from the second screen SCRb than end portions TE1 and TE2 of the second mirror 320b. Accordingly, it is possible to stably display an image on the second screen SCRb having a size larger than the first screen SCRa.

Meanwhile, according to FIG. 6B, of an area a and an area b within the second projection image LTb output from the picture generation device 300, the area a that is closer to the first screen SCRa can be reflected from the first mirror 310 and the second mirror 320a, and can be displayed in an area a' within the second screen SCRb, the area a' being spaced apart from the first screen SCRa.

Meanwhile, according to FIG. 6B, of the area a and the area b within the second projection image LTb output from the picture generation device 300, the area b that is spaced farther from the first screen SCRa can be reflected from the first mirror 310 and the second mirror 320a, and can be displayed in an area b' within the second screen SCRb, the area b' being adjacent to the first screen SCRa.

That is, according to FIG. 6B, the second projection image LTb projected onto the second screen SCRb can be an inverted image.

Accordingly, the second projection image LTb output from the picture generation device 300 of FIG. 6B can be a flipped image. This allows an image to be stably displayed on the second screen SCRb having a size larger than the first screen SCRa.

Meanwhile, unlike the second projection image LTa, the first projection image LTa output from the picture generation device 300 of FIG. 6B can be a normal (non-inverted) projection image.

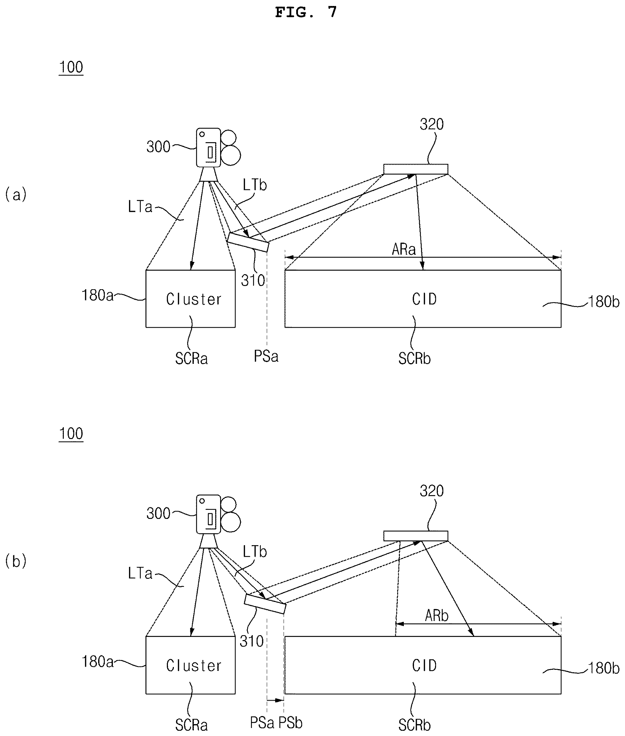

FIG. 7 illustrates a variation in the position of the first mirror of FIG. 4.

Referring to FIG. 7, the vehicle display apparatus 100 according to an embodiment of the present disclosure includes, similar to FIG. 4, a picture generation device 300, a first screen SCRa, a first mirror 310, a second mirror 320, and a second screen SCRb.

Meanwhile, the vehicle display apparatus 100 according to an embodiment of the present disclosure can further include a first actuator ACTa that varies a position or an angle of the first mirror 310.

Meanwhile, the vehicle display apparatus 100 according to an embodiment of the present disclosure can further include a signal processing device 170 that controls the first actuator ACTa.

Meanwhile, based on a change in a position or an angle of the first mirror 310, the signal processing device 170 can control a size of the second projection image LTb projected onto the second screen SCRb to be varied. This allows the size of an image displayed on the second screen SCRb to be varied while implementing a plurality of displays in an integrated manner using the single picture generation device 300.

(a) of FIG. 7 illustrates a case in which the first mirror 310 is at a first position PSa.

Accordingly, the second projection image LTb output from the picture generation device 300 can be displayed in a first area ARa of the second screen SCRb after passing through the first mirror 310 located at the first position PSa and the second mirror 320.

(b) of FIG. 7 illustrate a case in which the first mirror 310 is at a second position PSb.

The second position PSb can be a position that is spaced farther from the first screen SCRa or closer to the second screen SCRb than the first position PSa.

Accordingly, the second projection image LTb output from the picture generation device 300 can be displayed in a second area ARb of the second screen SCRb after passing through the first mirror 310 located at the second position PSb and the second mirror 320.

Here, a size of the second area ARb can be smaller than a size of the first area ARa, as shown in FIG. 7.

In addition, the second area ARb can be a portion of the second screen SCRb that is spaced apart from the first screen SCRa.

That is, when the first mirror 310 is at the second position PSb, no projection image can be displayed in an area of the second screen SCRb that is adjacent to the first screen SCRa, which is another portion of the second screen SCRb.

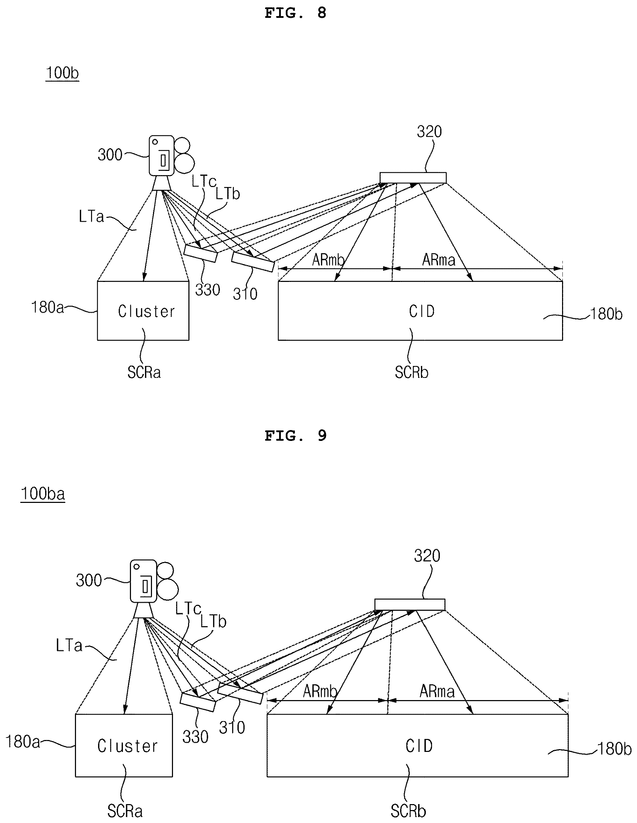

FIG. 8 illustrates an example of an internal configuration of a display apparatus for a vehicle according to another embodiment of the present disclosure.

Referring to FIG. 8, a display apparatus 100b for a vehicle (or simply referred to as "vehicle display apparatus") according to another embodiment of the present disclosure includes a picture generation device 300 that includes a light output device 400 and outputs a projection image, a first screen SCRa having one surface on which a first projection image LTa, which is a portion of the projection image from the picture generation device 300, is projected, a first mirror 310 that reflects a second projection image LTb, which is another portion of the projection image from the picture generation device 300, a second mirror 320 that reflects the second projection image LTb from the first mirror 310, a third mirror 330 that reflects a third projection image LTc, which is another portion of the projection image from the picture generation device 300, and a second screen SCRb that is horizontally adjacent to the first screen SCRa and has one surface on which at least one of the second projection image LTb reflected from the second mirror 320 or the third projection image LTc is projected.

Accordingly, by using the single picture generation device 300, it is possible to implement a plurality of displays in an integrated manner. In particular, by using the single picture generation device 300, it is possible to implement a cluster display and a center information display (CID) in an integrated manner.

That is, unlike the vehicle display apparatus 100 of FIG. 4, the vehicle display apparatus 100b of FIG. 8 further includes the third mirror 330 that reflects the third projection image LTc, which is another portion of the projection image from the picture generation device 300.

In addition, the second mirror 320 can further reflect the third projection image LTc from the third mirror 330. Accordingly, by using the single picture generation device 300, it is possible to implement a plurality of displays in an integrated manner.

Meanwhile, the second projection image LTb can be displayed in a first area ARma of the second screen SCRb, and the third projection image LTc can be displayed in a second area ARmb of the second screen SCRb. Accordingly, it is possible to display a plurality of images on the second screen SCRb.

Meanwhile, as shown in FIG. 8, the picture generation device 300 can output the second projection image LTb between the first projection image LTa and the third projection image LTc.

Accordingly, the third projection image LTc can be displayed in the area ARmb of the second screen SCRb that is closer to the first screen SCRa, and the second projection image LTb can be displayed in the area ARma of the second screen SCRb that is spaced farther from the first screen SCRa. Thus, it is possible to implement a plurality of displays in an integrated manner using the single picture generation device 300.

Meanwhile, an optical path of the second projection image LTb and an optical path of the third projection image LTc can be separated, as shown in FIG. 8.

That is, the third projection image LTc reflected from the third mirror 330 can be incident on the second mirror 320 while being spaced apart from the first mirror 310. Accordingly, by using the single picture generation device 300, it is possible to implement a plurality of displays in an integrated manner.

Meanwhile, the first mirror 310 can be a flat mirror, and the second mirror 320 or the third mirror 330 can be a concave mirror.

For example, the second mirror 320 or the third mirror 330 can have a greater curvature than the first mirror 310. Accordingly, it is possible to stably display an image on the second screen SCRb having a size larger than the first screen SCRa.

Meanwhile, as in FIG. 6A, a center of the second mirror 320 can be closer to the second screen SCRb than end portions of the second mirror 320, or as in FIG. 6B, the center of the second mirror 320 can be spaced farther from the second screen SCRb than the end portions of the second mirror 320.

FIG. 9 illustrates an example of an internal configuration of a display apparatus for a vehicle according to yet another embodiment of the present disclosure.

Referring to FIG. 9, a display apparatus 100ba for a vehicle (or simply referred to as "vehicle display apparatus") according to yet another embodiment of the present disclosure includes, similar to FIG. 7, a picture generation device 300, a first screen SCRa, a first mirror 310, a second mirror 320, a third mirror 330, and a second screen SCRb.

However, unlike FIG. 8, the optical path of the second projection image LTb, and the optical path of the third projection image LTc are not separated but partially overlap.

That is, at least a portion of the third projection image LTc reflected from the third mirror 330 can be transmitted through the first mirror 310 and be incident on the second mirror 320.

Meanwhile, the first mirror 310 can reflect the second projection image LTb having an incident angle less than or equal to a predetermined angle, and can transmit the third projection image LTc having an incident angle greater than the predetermined angle.

That is, an angle at which the second projection image LTb is incident on the first mirror 310 can be less than an angle of the third projection image LTc.

Accordingly, the first mirror 310 can selectively perform transmission or reflection, allowing the third projection image LTc reflected from the third mirror 330 and the second projection image LTb reflected from the first mirror 310 to be incident on different areas of the second mirror 320.

As such, the third projection image LTc can be displayed in an area ARmb of the second screen SCRb that is closer to the first screen SCRa, and the second projection image LTb can be displayed in an area ARma of the second screen SCRb that is spaced farther from the first screen SCRa. Thus, it is possible to implement a plurality of displays in an integrated manner using the single picture generation device 300.

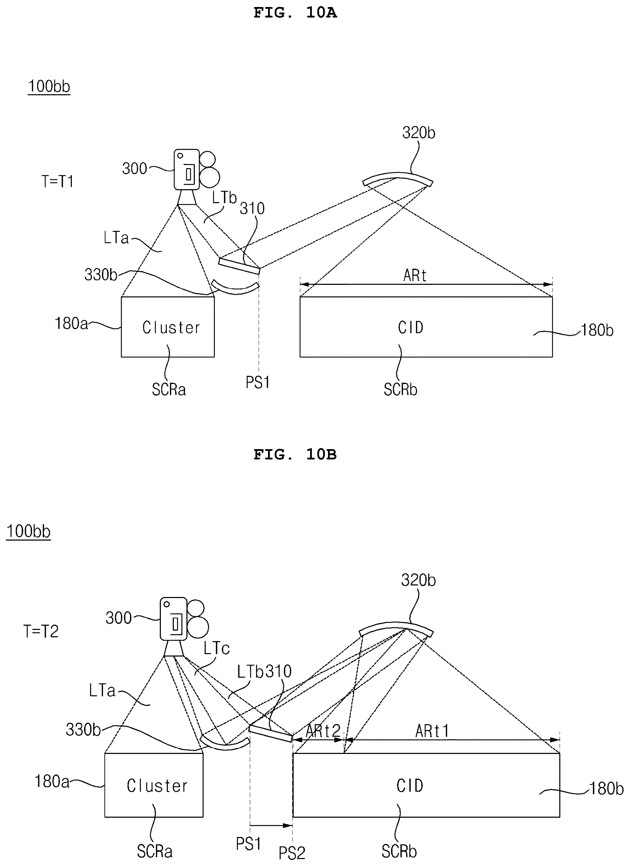

FIGS. 10A to 11B are diagrams referred to in the description of FIG. 8 or FIG. 9.

FIG. 10A and 10B illustrate a variation in the position of the first mirror 410 in the vehicle display apparatus 100b of FIG. 8 or the vehicle display apparatus 100ba of FIG. 9.

FIG. 10A illustrates a case in which the first mirror 310 is at a first position PS1.

Referring to FIG. 10A, the vehicle display apparatus 100b of FIG. 8 or the vehicle display apparatus 100ba of FIG. 9 includes a picture generation device 300, a first screen SCRa, a first mirror 310, a second mirror 320b configured as a concave mirror, a third mirror 330 configured as a concave mirror, and a second screen SCRb.

Meanwhile, the vehicle display apparatus 100b of FIG. 8 or the vehicle display apparatus 100ba of FIG. 9 can further include a first actuator ACTa that varies a position or an angle of the first mirror 310 and a signal processing device 170 that controls the first actuator ACTa.

Meanwhile, based on a change in a position or an angle of the first mirror 310, the signal processing device 170 can control a size of the second projection image LTb projected onto the second screen SCRb to be varied.

Meanwhile, based on a change in a position or an angle of the first mirror 310, the signal processing device 170 can control a type or a number of projection images projected onto the second screen SCRb to be varied.

As shown in FIG. 10A, when the first mirror 310 is at the first position PS1, the picture generation device 300 can output the first projection image LTa and the second projection image LTb, and can not output the third projection image.

Meanwhile, when the first projection image LTa and the second projection image LTb are output, the signal processing device 170 can control the first mirror 310 to be located at the first position PS1.

Accordingly, when the picture generation device 300 outputs the first projection image LTa and the second projection image LTb, the first projection image LTa can be displayed on the first screen SCRa, and the second projection image LTb can be displayed on the second screen SCRb.

In the figure, at a first time point T1, the first mirror 310 is at the first position PS1 and the picture generation device 300 outputs the first projection image LTa and the second projection image LTb, such that the first projection image LTa is displayed on first screen SCRa and the second projection image LTb is displayed in an area ARt of the second screen SCRb.

FIG. 10B illustrates a case in which the first mirror 310 is at a second position PS2.

Referring to FIG. 10B, when the first mirror 310 is at the second position PS2, the picture generation device 300 can output the first projection image LTa, the second projection image LTb, and the third projection image LTc.

Here, the second position PS2 can be a position that is spaced farther from the first screen SCRa or closer to the second screen SCRb than the first position PS1.

Meanwhile, when the first projection image LTa, the second projection image LTb, and the third projection image LTc are output, the signal processing device 170 can control the first mirror 310 to be located at the second position PS2.

Accordingly, when the picture generation device 300 outputs the first projection image LTa, the second projection image LTb, and the third projection image LTc, the first projection image LTa can be displayed on the first screen SCRa, and the second projection image LTb and the third projection image LTc can be displayed on the second screen SCRb.

In the figure, at a second time point T2, the first mirror 310 is at the second position PS2 and the picture generation device 300 outputs the first projection image LTa, the second projection image LTb, and the third projection image LTc, such that the first projection image LTa is displayed on the first screen SCRa, the second projection image LTb is displayed in a first area ARt1 of the second screen SCRb, and the third projection image LTc is displayed in a second area ARt2 of the second screen SCRb.

In this case, the second area ARt2 of the second screen SCRb can operate as a center information display (CID), and the first area ARt1 of the second screen SCRb can operate as a passenger information display (PID) . Accordingly, by using the single picture generation device 300, it is possible to implement a plurality of displays in an integrated manner.

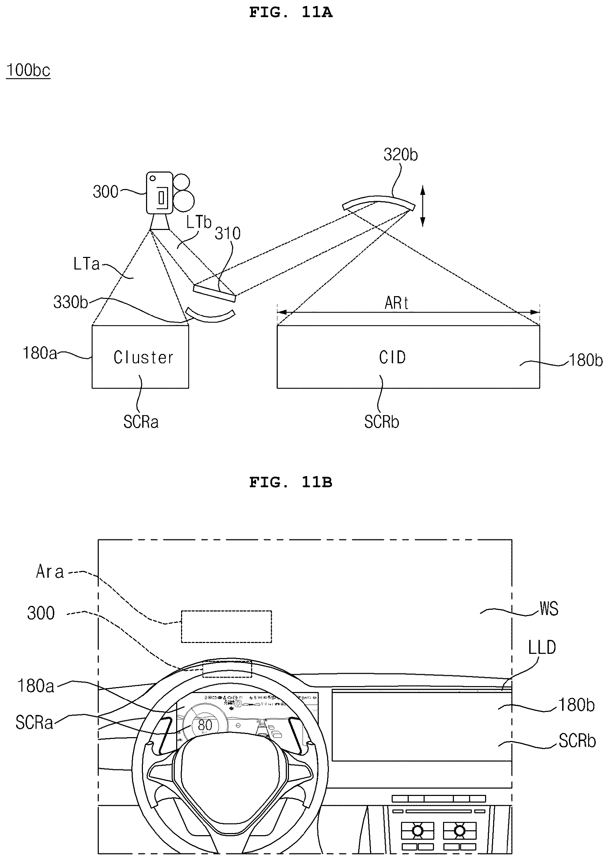

FIGS. 11A and 11B illustrate ambient lighting being displayed according to movement of the second mirror of FIG. 9.

FIG. 11A illustrates an example of an internal configuration of a display apparatus for a vehicle according to yet another embodiment of the present disclosure.

Referring to FIG. 11A, a display apparatus 100bc for a vehicle (or simply referred to as "vehicle display apparatus") according to yet another embodiment of the present disclosure includes a picture generation device 300, a first screen SCRa, a first mirror 310, a second mirror 320b configured as a concave mirror, a third mirror 330b configured as a concave mirror, and a second screen SCRb.

Meanwhile, the vehicle display apparatus 100bc according to yet another embodiment of the present disclosure can further include a second actuator ACTb that varies a position or an angle of the second mirror 320.

Meanwhile, the vehicle display apparatus 100bc according to yet another embodiment of the present disclosure can further include a signal processing device 170 that controls the second actuator ACTb.

Meanwhile, the second mirror 320b can operate at a fixed position in a normal mode, and can move vertically (up and down) in response to an ambient lighting mode.

That is, the signal processing device 170 can control the second mirror 320b to remain fixed in the normal mode, and can control the second mirror 320b to move vertically in the ambient lighting mode.

For example, in the normal mode, since the position of the second mirror 320b is fixed, it can operate as in FIG. 10A.

That is, when the picture generation device 300 outputs the first projection image LTa and the second projection image LTb, the first projection image LTa can be displayed on the first screen SCRa, and the second projection image LTb can be displayed on the second screen SCRb.

In another example, in the ambient lighting mode, the second mirror 320b can move vertically, and the first projection image LTa can be displayed on the first screen SCRa, the second projection image LTb can be displayed on the second screen SCRb, and a portion of light can be displayed as ambient lighting at an upper or lower portion of the second screen SCRb due to the vertical movement of the second mirror 320b.

Meanwhile, in the ambient lighting mode, the first projection image LTa can be displayed on the first screen SCRa, the second projection image LTb can not be displayed on the second screen SCRb, and a portion of light can be displayed as ambient lighting at the upper or lower portion of the second screen SCRb due to the vertical movement of the second mirror 320b.

To this end, in the ambient lighting mode, the picture generation device 300 can output a second projection image for lighting, instead of a second projection image for image display.

That is, the second projection image output from the picture generation device 300 can be smaller in size in the ambient lighting mode than in the normal mode.

FIG. 11B illustrates a case in which ambient lighting is implemented at an upper portion of the second screen SCRb.

Referring to FIG. 11B, the second projection image LTb is not displayed on the second screen SCRb, and a portion of light can be displayed as ambient lighting LLD at the upper portion of the second screen SCRb due to vertical movement of the second mirror 320b. Accordingly, it is possible to easily realize ambient lighting in the vehicle interior.

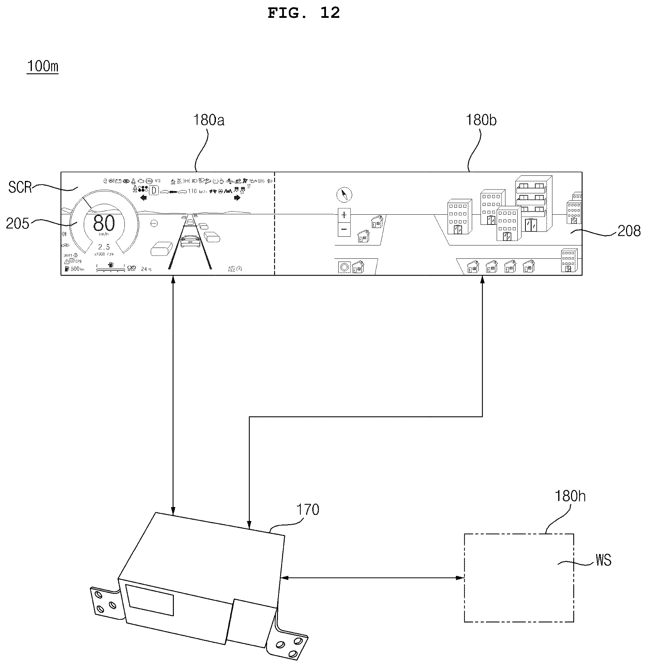

FIG. 12 illustrates an outer appearance of a display apparatus for a vehicle according to yet another embodiment of the present disclosure.

Referring to FIG. 12, a display apparatus 100m for a vehicle (or simply referred to as "vehicle display apparatus") includes, similar to FIG. 2, a picture generation device 300 that outputs a projection image, a first mirror 310 that reflects a second projection image LTb, which is another portion of the projection image from the picture generation device 300, and a second mirror 320 that reflects the second projection image LTb from the first mirror 310.

However, the vehicle display apparatus 100m according to yet another embodiment of the present disclosure differs from that of FIG. 2 in that it is implemented as a single integrated screen rather than two screens.

That is, the vehicle display apparatus 100m according to yet another embodiment of the present disclosure includes a picture generation device 300 that outputs a projection image, a first mirror 310 that reflects a second projection image LTb, which is another portion of the projection image from the picture generation device 300, a second mirror 320 that reflects the second projection image LTb from the first mirror 310, and a screen SCR having a first area ARn1 on which a first projection image LTa, which is a portion of the projection image from the picture generation device 300, is projected and a second area ARn2 on which the second projection image LTb reflected from the second mirror 320 is projected.

Accordingly, the first area ARn1 of the screen SCR can operate as a cluster display 180a, and the second area ARn2 of the screen SCR can operate as a center information display (CID) 180b.

Thus, by using the single picture generation device 300, the plurality of displays 180a and 180b can be implemented in an integrated manner.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for a vehicle, the display apparatus comprising:
a picture generation device including a light output device and configured to output a projection image;
a first screen including one surface on which a first projection image corresponding to a portion of the projection image from the picture generation device is projected;
a first mirror configured to reflect a second projection image corresponding to another portion of the projection image from the picture generation device;
a second mirror configured to reflect the second projection image from the first mirror; and
a second screen horizontally adjacent to the first screen, the second screen including one surface on which the second projection image reflected from the second mirror is projected.

2. The display apparatus of claim 1, wherein the second mirror is a concave mirror.

3. The display apparatus of claim 2, wherein a center of the second mirror is closer to the second screen than end portions of the second mirror.

4. The display apparatus of claim 2, wherein a center of the second mirror is spaced farther from the second screen than end portions of the second mirror.

5. The display apparatus of claim 4, wherein the second projection image projected from the picture generation device is an inverted image.

6. The display apparatus of claim 1, further comprising a first actuator configured to change a position or an angle of the first mirror.

7. The display apparatus of claim 1, further comprising a signal processing device configured to control the first actuator,
wherein, based on a change in the position or angle of the first mirror, the signal processing device is configured to change a size of the second projection image projected onto the second screen.

8. The display apparatus of claim 1, further comprising a third mirror configured to reflect a third projection image corresponding to another portion of the projection image from the picture generation device,
wherein the second mirror reflects the third projection image from the third mirror.

9. The display apparatus of claim 8, wherein the second projection image is displayed in a first area of the second screen, and the third projection image is displayed in a second area of the second screen.

10. The display apparatus of claim 8, wherein the picture generation device outputs the second projection image between the first projection image and the third projection image.

11. The display apparatus of claim 8, wherein the third projection image is displayed in an area of the second screen closer to the first screen, and the second projection image is displayed in an area of the second screen spaced farther from the first screen.

12. The display apparatus of claim 8, wherein the third projection image reflected from the third mirror is incident on the second mirror while being spaced apart from the first mirror.

13. The display apparatus of claim 8, wherein at least a portion of the third projection image reflected from the third mirror is transmitted through the first mirror and is incident on the second mirror.

14. The display apparatus of claim 8, further comprising a first actuator configured to change a position or an angle of the first mirror.

15. The display apparatus of claim 14, further comprising a signal processing device configured to control the first actuator,
wherein, based on a change in the position or angle of the first mirror, the signal processing device is configured to change a size of the second projection image projected onto the second screen.

16. The display apparatus of claim 8, wherein:
in response to outputting the first projection image and the second projection image from the picture generation device, the first projection image is displayed on the first screen, and the second projection image is displayed on the second screen; and
in response to outputting the first projection image, the second projection image, and the third projection image from the picture generation device, the first projection image is displayed on the first screen, and the second projection image and the third projection image are displayed on the second screen.

17. The display apparatus of claim 16, wherein:
in response to outputting the first projection image and the second projection image from the picture generation device, the first mirror is at a first position; and
in response to outputting the first projection image, the second projection image, and the third projection image from the picture generation device, the first mirror is at a second position.

18. The display apparatus of claim 8, further comprising a second actuator configured to change a position or an angle of the second mirror.

19. A display apparatus for a vehicle, the display apparatus comprising:
a picture generation device including a light output device and configured to output a projection image;
a first screen including one surface on which a first projection image corresponding to a portion of the projection image from the picture generation device is projected;
a first mirror configured to reflect a second projection image corresponding to another portion of the projection image from the picture generation device;
a second mirror configured to reflect the second projection image from the first mirror;
a third mirror configured to reflect a third projection image corresponding to another portion of the projection image from the picture generation device; and
a second screen horizontally adjacent to the first screen, the second screen including one surface on which at least one of the second projection image reflected from the second mirror or the third projection image is projected.

20. A display apparatus for a vehicle, the display apparatus comprising:
a picture generation device including a light output device and configured to output a first projection image, which is a portion of a projection image, and a second projection image corresponding to another portion of the projection image;
a first mirror configured to reflect the second projection image from the picture generation device;
a second mirror configured to reflect the second projection image from the first mirror; and
a screen including a first area on which the first projection image from the picture generation device is projected and a second area on which the second projection image from the second mirror is projected.
